# EUROPÄISCHE PATENTSCHRIFT

(11) **EP 0 713 639 B1**
(45) Veröffentlichungstag und Bekanntmachung des Hinweises auf die Patenterteilung: **27.09.2000**
(21) Anmeldenummer: 95114159.7
(22) Anmeldetag: 09.09.1995
(51) Int. Cl.: A01D 41/12, A01D 41/14, A01B 69/08

(54) **Tastvorrichtung zur selbsttätigen Seitenführung einer selbstfahrenden Erntemaschine**
Tracing device for automatic lateral guiding of a self-propelled harvesting machine
Dispositif palpeur pour le guidage latéral automatique d'un moissonneuse automotrice

(30) Priorität: 24.11.1994 DE 4441841
(43) Veröffentlichungstag der Anmeldung: 29.05.1996
(73) Patentinhaber: CLAAS KGaA, 33428 Harsewinkel (DE)
(72) Erfinder: Behnke, Willi, D-33803 Steinhagen (DE)

(56) Entgegenhaltungen:
- AT-B- 280 678
- AT-B- 322 253
- AT-B- 392 191
- DD-A- 238 520
- US-A- 3 797 208

## Beschreibung

Die vorliegende Erfindung betrifft eine Tastvorrichtung zur selbsttätigen Seitenführung einer selbstfahrenden Erntemaschine, die mit einem Getreideschneidwerk ausgerüstet ist, bei deren Einsatz auf dem Feld vom Schnitt der Feldfrüchte Stoppelreihen entstehen, wobei die Tastvorrichtung einen wenigstens eine Reihe der Feldfrüchte durch seitliche Anlage abtastenden, beweglichen Tastfühler beinhaltet, bei dem das bodenseitige Ende der Tasteinrichtung als Gleitkörper ausgeführt und dieser beweglich angelenkt ist, dessen Bewegung in elektrische Steuersignale umwandelbar und nach entsprechender Aufbereitung in eine Steuereinrichtung der lenkbaren Räder einspeisbar sind.

Zur Entlastung des Fahrers einer selbstfahrenden Erntemaschine sind selbsttätige Seitenführungen zur Beeinflußung der Lenkung der Erntemaschinen in vielen Ausführungen bekannt. Dabei ist der Tastfühler der Geber eines Regelkreises. Ein Beispiel für einen Tastfühler findet sich in der DD 238 520. Dort ist eine Meßeinrichtung zum berührenden Erfassen von Leitlinien mobiler Aggregate offenbart, bei der das bodenseitige Ende der Tasteinrichtung als Gleitkörper ausgeführt ist, dieser beweglich angelenkt ist und die leitlinieninduzierte Bewegung des Gleitkörpers in elektrische Steuersignale umwandelbar ist. Allerdings ist diese Tasteinrichtung vorrangig als Furchenfolgeeinrichtung gedacht. Wegen des annähernd dreieckigen Querschnitts einer solchen Tasteinrichtung ist diese ungeeignet, Pflanzenreihen abzutasten, weil eine solche Querschnittsgeometrie keine Abstützung des Tastkörpers an der Pflanzenreihe erlaubt, ohne daß die abzutastenden Getreidehalme beiseitegedrückt werden.

Am weitesten verbreitet sind mechanische Tastfühler, beispielsweise in Form eines Bügels (DE 27 05 491 C2, GB 106 771) oder in Form eines kapazitiven Sensors (DE 38 31 761 A1). Die bisher bekannten Tastvorrichtungen sind bei allen Erntemaschinen an solchen Stellen angebracht, daß sie innerhalb der noch nicht abgeernteten Reihenkultur wirksam werden. Die in Frage kommenden Reihenkulturen sind beispielsweise Mais, Rüben, Möhren und dergleichen. Die Tastfühler tasten die Reihe unmittelbar über dem Boden ab. Die Bewegung des Tastfühlers wird beispielsweise auf einen Winkelgeber in Form eines elektrischen Regelwiderstandes zur Erzeugung von elektrischen Steuersignalen übertragen. Die bislang bekannten Tastvorrichtungen sind ausschließlich für solche Erntemaschinen einsetzbar, bei denen die zu erntenden Feldfrüchte in Reihen mit einem relativ großen Abstand zueinander von beispielsweise 50 cm und mehr stehen. Außerdem ist bei diesen Feldfrüchten gewährleistet, daß sie dem Tastfühler eine relativ große Kraft entgegensetzen. Dies ergibt sich bei Möhren, Rüben und ähnlichen Feldfrüchten daraus, daß sie sich zumindest teilweise in der Erde befinden. Sofern es sich bei der Feldfrucht um Mais handelt, ist der Stengel relativ dick, so daß auch hier durch den Tastfühler eine relativ große Kraft ausgeübt werden kann. Darüberhinaus ist bei den bislang erwähnten Reihenkulturen bei der Ernte eine aufrechte, innerhalb gewisser Grenzen, definierte Stellung der einzelnen Pflanzen gewährleistet. Dadurch ist die Abtastung durch den Tastfühler der Tastvorrichtung unproblematisch.

Bei dünnstengeligen Reihenkulturen verhält es sich jedoch grundsätzlich anders. Ein zur seitlichen Abtastung eines dünnstengeligen Bestands an Reihenkulturen vorgesehener Taster ist beispielsweise in der Schrift US 3,797,208 offenbart. Allerdings kann mit diesem taster keine zufriedenstellende Funktion erzielt werden, weil anbauspezifische Gegenheiten zu berücksichtigen sind. Der Abstand zwischen den einzelnen Saatreihen liegt normalerweise zwischen 100 und 120 mm. In einem Getreidebestand kann es, bedingt durch Witterungseinflüsse oder dergleichen, zum sogenannten Lagergetreide kommen. Eine definierte Stellung der Pflanzen in den einzelnen Pflanzenreihen ist dann nicht mehr gegeben. Es herrschen deshalb beim Ernten ständig wechselnde Verhältnisse. Auch dürfen die von der Reihenabtastung einwirkenden Kräfte bei dünnstengeligen Halmen aller Getreidearten nur äußerst gering sein, da die Halme sonst abknicken und nicht mehr vom Mähvorsatz erfaßt werden, was zu entsprechenden Ernteverlusten führt. Aufgrund dieser Besonderheiten können die bekannten Tastvorrichtungen nicht in Getreidekulturen eingesetzt werden.

Ein weiteres Ausführungsbeispiel für einen Reihentaster zur Rübenernte findet sich in der AT 392 191. Die Einsatzbedingungen von Tastern bei der Rübenernte sind jedoch unterschiedlich zu denen in der Getreideernte. Der offenbarte Federzinkenallein ist ohne weitere Anpassungen an die Besonderheiten der Getreideernte für dieses Einsatzgebiet unbrauchbar.

Der vorliegenden Erfindung liegt die Aufgabe zu Grunde, eine Tastvorrichtung der eingangs näher beschriebenen Art so zu gestalten, daß auch eine Erntemaschine mit einer selbsttätigen Seitenführung ausgerüstet werden kann, die zum Ernten von dünnstengeligen Getreidearten eingesetzt wird, bei denen die einzelnen Pflanzenreihen in einem relativ geringen Abstand zueinander stehen, und bei denen gegebenenfalls damit zu rechnen ist, daß die einzelnen Pflanzen eine für eine Abtastung unmögliche nicht mehr definierbare Stellung einnehmen.

Die gestellte Aufgabe wird gelöst, indem die Tastvorrichtung als Stoppeltasteinrichtung mit mindestens einer zwischen zwei benachbarten Stoppelreihen mit Boden- und Pflanzenkontakt führbaren Tastkufe ausgebildet und die Stoppeltasteinrichtung direkt, bezogen auf die Vorwärtsfahrtrichtung, hinter dem Schneidwerk einer selbstfahrenden Erntemaschine angeordnet ist, wobei sich die Seitenwände im vorderen Bereich jeder Tastkufe keilförmig verjüngen, der vordere Endbereich in einem Bogen und die untere dem Erdboden zugewandte Fläche jeder Tastkufe konkav nach oben gezogen verläuft, die Breite jeder Tastkufe kleiner ist als der Abstand von zwei benachbarten Stoppelreihenvoneinander und vorzugsweise zwischen 60 und 80 % des Abstandes von zwei Stoppelreihen liegt und sich die Länge jeder Tastkufe über den Abstand von mehreren Stoppeln einer Stoppelreihe erstreckt.

Da der Tastfühler der erfindungsgemäßen Tastvorrichtung als Stoppeltasteinrichtung ausgebildet ist, können nunmehr Erntemaschinen mit einer selbsttätigen Seitenführung zur Beeinflußung der Lenkung ("Autopilot") ausgerüstet werden, die zum Ernten von Getreide oder zum Pressen von Stroh ausgelegt sind. Die lenkbare Achse oder die lenkbaren Räder beeinflussende und bekannte Steuervorrichtung kann in vorteilhafter Weise unverändert übernommen werden. Der Autopilot wird vom Fahrer der Erntemaschine eingestellt und kann jederzeit auch wieder ausgestellt werden. Als Stoppeln werden üblicherweise die oberirdischen Pflanzenrückstände von abgemähten Feldfrüchten bezeichnet. Die Tastkufen der Stoppeltasteinrichtung werden im Einsatz mit Bodenkontakt geführt, d.h. sie gleiten auf dem Boden. Da die Seitenbiegekraft eines einzelnen Stoppels zu gering ist, um einer Tastvorrichtung einen Richtungsimpuls geben zu können, weisen die Tastkufen eine solche Länge auf, daß ihre Tastkante sich an einer solchen Vielzahl von Stoppeln entlang tastet, daß die Summe der Seitenbiegekräfte der abgetasteten Stoppeln ausreicht, um einen zuverlässigen Richtungsimpuls geben zu können. Dadurch ist immer gewährleistet, daß die zwischen zwei Tastkufen liegende Stoppelreihe exakt abgetastet wird. Das daraus abgeleitete Steuersignal ist demzufolge für die Regelung der Seitenführung verwendbar. Beim Abtasten ist durch die Horizontalparallelführung sichergestellt, daß die beidseitig einer Stoppelreihe geführten Tastkufen stets zwischen den beiden zugeordneten Stoppelreihen geführt werden, so daß es nicht zu Fehlfunktionen kommen kann. Der Tastfühler wird beispielsweise bei einem Mähdrescher beim Absenken des Schneidwerkes in die Schnittposition aktiviert. Die Begriffe "vertikal" und "horizontal" beziehen sich auf die Normalstellung der Erntemaschine, d.h. wenn sie auf einem horizontalen Boden stehen. Beim Einsatz in einer Hanglage gelangen dann die entsprechenden Bauteile in eine Schräglage.

Bei den in Frage kommenden Reihenkulturen ist es unvermeidbar, beispielsweise durch Spritzspuren, daß innerhalb einer Pflanzenreihe eine Lücke entsteht. Um eine Fehlfunktion der Stoppeltasteinrichtung zu vermeiden ist es deshalb möglich, daß sie mit mehreren Paaren von Tastkufen zur Abtastung von Stoppelreihen ausgerüstet ist. Da man nicht ausschließen kann, daß direkt nebeneinanderliegende Stoppelreihen mit Lücken behaftet sind, können die abzutastenden Stoppelreihen weiter auseinander liegen.

Bei einem Mähdrescher kann die Stoppeltasteinrichtung mittels geeigneter Haltevorrichtungen sowohl seitlich als auch direkt hinter dem Schneidwerk angeordnet werden. Vorteilhaft ist jedoch, wenn sie direkt, bezogen auf die Vorwärtsfahrtrichtung, hinter dem Schneidwerk angeordnet ist. Dadurch kann die selbsttätige Seitenführung auch dann benutzt werden, wenn bei Beginn einer Erntearbeit seitlich neben dem zu erntenden Bestand sich noch ein weiterer Bestand befindet.

In weiterer Ausgestaltung ist vorgesehen, daß die Horizontalparallelführung als Viergelenkkette ausgebildet ist, und daß die beiden bei Vorwärtsfahrtrichtung der Erntemaschine vorn liegenden Lenker in einer um eine horizontale Achse schwenkbaren Drehführung gelagert sind. Diese Drehführung ermöglicht, daß die Stoppeltasteinrichtung nach oben ausweichen kann, wenn die Tastkufen Fremdkörper überfahren. Außerdem kann sie in eine Transportstellung nach oben geschwenkt werden. Die Ausbildung der Horizontalparallelführung als Viergelenkkette bietet den Vorteil einer einfachen konstruktiven, betriebssicheren Bauweise. Damit die Bewegung der Horizontalparallelführung nach beiden Seiten begrenzt wird, ist vorgesehen, daß die Drehführung mit zwei lagegerechten Anschlägen ausgerüstet ist, die eine Einstellung zulassen. In konstruktiv einfacher Weise ist vorgesehen, daß die beiden Lenker der Horizontalparallelführung mit ihren hinteren Enden in einem Koppelstück gelagert sind, welches mit einem quer zur Längsachse der Erntemaschine stehende Tragrohr bestückt ist, an dem jede Tastkufe gegen seitliche Verschiebung gesichert, jedoch im Abstand zueinander einstellbar mittels eines frei beweglichen Aufhängung angeordnet ist. Das Koppelstück ist Teil der Viergelenkkette, so daß die exakte Parallelführung gewährleistet ist. Das Tragrohr bietet den Vorteil, daß die Tastkufen auf die unterschiedlichen Abstände der Stoppelreihen exakt einstellbar sind. Die Verbindung der Tastkufen mit dem Tragrohr durch die freibewegliche Aufhängung bietet den Vorteil, daß jede Tastkufe bei Bodenunebenheiten ausweichen kann. Die freie bewegliche Aufhängung läßt sich konstruktiv und funktionell in besonders einfacher Art realisieren, wenn sie aus einer Vertikalparallelführung gebildet ist, wobei die beiden Parallelogrammhebel mit den oberen Enden in einem auf dem Tragrohr festgesetzten Profilstück parallel und im Abstand zueinander gelagert sind, und die unteren Enden der Parallelogrammhebel im Abstand zueinander an der Tastkufe gelagert sind. Dabei ist es dann zweckmäßig, wenn in jeder in Vorwärtsfahrtrichtung vorn liegende Parallelogrammhebel der Vertikalparallelführung kürzer ist als der hintere Parallelogrammhebel, da dann der vordere Bereich der Tastkufen beim Überfahren einer Bodenunebenheit stärker angehoben wird als der hintere Bereich.

Damit sichergestellt ist, daß jede Tastkufe sicher zwischen zwei benachbarten Stoppelreihen geführt wird, ist vorgesehen, daß die Seitenwände des vorderen Bereichs jeder Tastkufe sich keilförmig verjüngen und am vorderen Ende eine abgerundete, bogenförmige Spitze bilden. Damit eine Bodenunebenheit überfahren werden kann, ist das untere Ende des vorderen Bereichs jeder Tastkufe zum mittleren Bereich nach oben hin angewinkelt. Da es unvermeidbar ist, daß zur Beseitigung einer Störung die Erntemaschine rückwärts gefahren wird, ist der hintere Bereich jeder Tastkufe ebenfalls nach oben angewinkelt. Dadurch können auch Bodenunebenheiten und Hindernisse überfahren werden. Damit jede Kufe am Fuße der Stoppelreihe anliegt, und nicht durch Bodenunebenheiten abgehoben wird, ist vorgesehen, daß die untere, dem Erdboden zugewandte Fläche jeder Tastkufe konkav nach oben gezogen verläuft. Die Kufe gleitet demzufolge nur auf den Längsrändern. Außerdem kann sie nicht auf einen evtl. von der Drillmaschine aufgeworfenen Hügel zwischen den Stoppelreihen auflaufen. Damit auch eine Stoppelreihe sicher erkannt werden kann, ist vorgesehen, daß sich die Länge jeder Tastkufe über den Abstand mehrerer Stoppeln einer Reihe erstreckt. Zweckmäßigerweise ist die Breite jeder Tastkufe kleiner als der Abstand von zwei benachbarten Stoppelreihen und liegt vorzugsweise zwischen 60 und 80 % dieses Abstandes. Dadurch wird verhindert, daß die Gleitkufen über Stoppelreihen hinweg gezogen werden. In besonders vorteilhafter Weise ist die Drehführung in einem Halter schwenkbar gelagert, der im vorderen Bereich der Erntemaschine an Maschinenteilen festgelegt ist. Dadurch ist der Abstand der Tastvorrichtung zum Bestand äußerst gering, so daß eine exakte Seitenführung gewährleistet ist. Sofern es sich bei der Erntemaschine um einen Mähdrescher handelt ist vorgesehen, daß der Halter an der rückseitigen, dem Schneidmesser abgewandten Seite des Schneidwerkes befestigt ist.

Anhand der beiliegenden Zeichnungen wird die Erfindung noch näher erläutert. Es zeigen:
- Figur 1: einen mit der erfindungsgemäßen Tastvorrichtung ausgerüsteten Mähdrescher in Draufsicht, schematisch, wobei unterschiedliche Anbauorte der Vorrichtung strichpunktiert angegeben sind.
- Figur 2: die erfindungsgemäße Tastvorrichtung als Einzelheit in einer perspektivischen Darstellung
- Figur 3: die beidseitig einer Stoppelreihe stehenden Gleitkufen im Querschnitt, nach Linie III-III der Figur 4
- Figur 4: eine Einzelheit gemäß der Figur 1 in vergrößerter Darstellung, die Tastvorrichtung in Draufsicht zeigend,
- Figur 5: eine der Figur 4 entsprechende Seitenansicht und
- Figur 6: eine der Figur 5 entsprechende Seitenansicht jedoch die Tastvorrichtung in einer Außerbetriebsstellung und in einer Transportstellung zeigend.

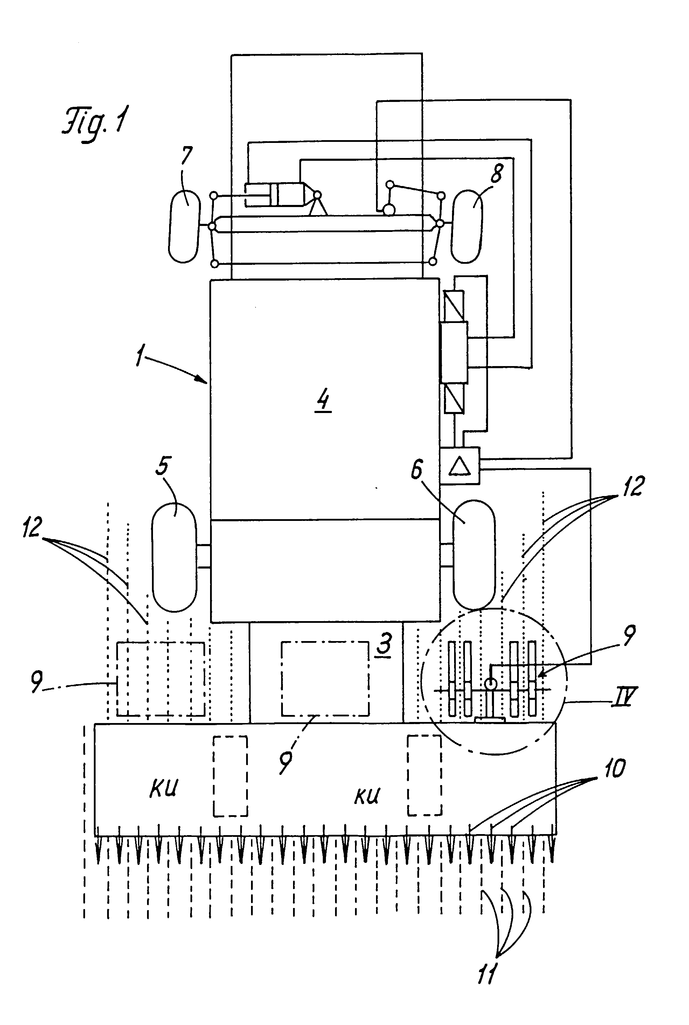

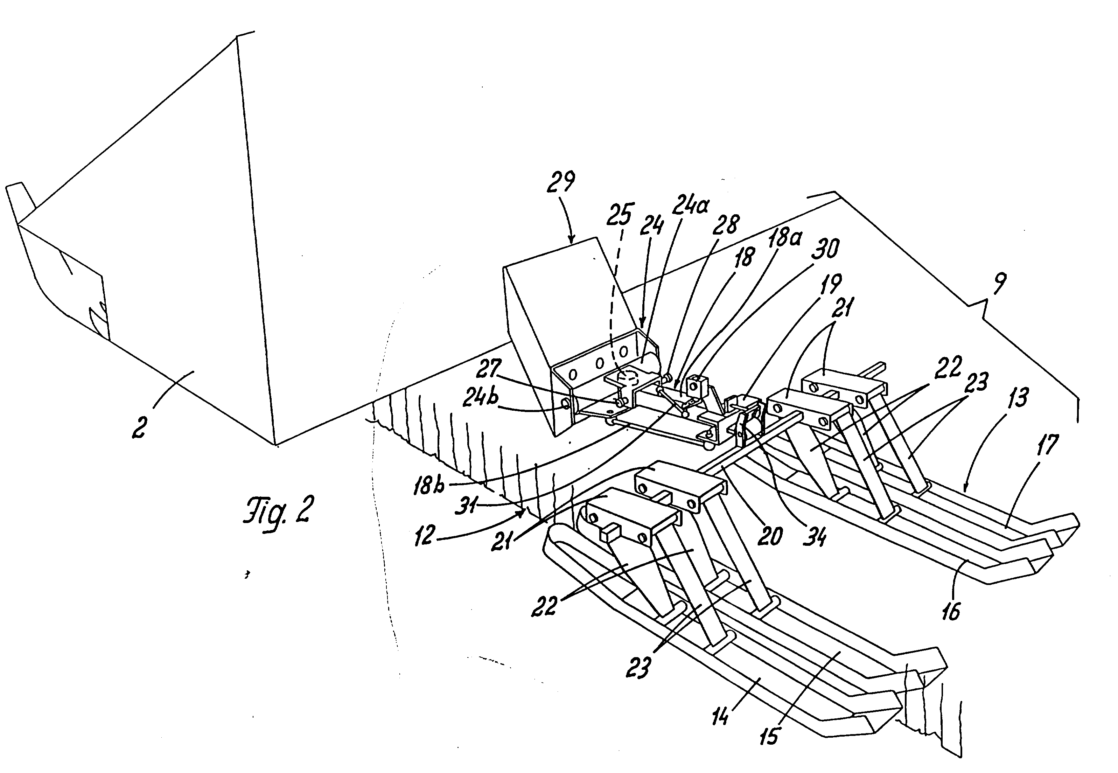

Der in der Figur 1 als bevorzugtes Ausführungsbeispiel dargestellte Mähdrescher 1 ist an der Frontseite mit einem Schneidwerk 2, einem sich daran anschließenden Einzugskanal 3 und einer das Dreschwerk beinhaltenden Hauptmaschine 4 ausgerüstet. Der Einzugskanal mündet in die Hauptmaschine 4 ein. Die vorderen Räder 5, 6 des Mähdreschers 1 sind in nicht näher erläuterten Weise antreibbar, jedoch nicht lenkbar. Die hinteren Räder 7,8 sind lenkbar. Dies erfolgt in bekannter Weise über Gestänge und Arbeitszylinder. Zur selbsttätigen Seitenführung ist der Mähdrescher 1 außerdem mit einer an Hand der Figuren 2 bis 6 noch näher erläuterten Tasteinrichtung 9 ausgerüstet. Aus Gründen der vereinfachten Darstellung ist das antreibbare Schneidmesser des Schneidwerkes 2 nicht dargestellt. Die Tasteinrichtung 9 ist an der rückwärtigen, dem Schneidmesser abgewandten Seite des Schneidwerkes 2 angeflanscht. Von der Tasteinrichtung 9 werden in allgemein bekannter Weise Signale gegeben, die in elektrische Steuersignale für die Lenkung der hinteren Räder 7, 8 nach entsprechender Aufbereitung umgewandelt werden. Die Steuerung der hinteren Räder 7, 8 erfolgt über eine nicht näher beschriebene, ebenfalls bekannte Einrichtung (DD-PS 106 771). An der Vorderseite des Schneidwerkes 2 sind eine Vielzahl von andeutungsweise dargestellten Ährenheber 10 montiert. Diese durchstreifen in Bodennähe die Pflanzenreihen 11, die in strichpunktierten Linien dargestellt sind. Nach dem Abmähen verbleiben auf dem Feld Stoppelreihen 12. Die Stoppelreihen 12 sind durch gepunktete Linien angedeutet.

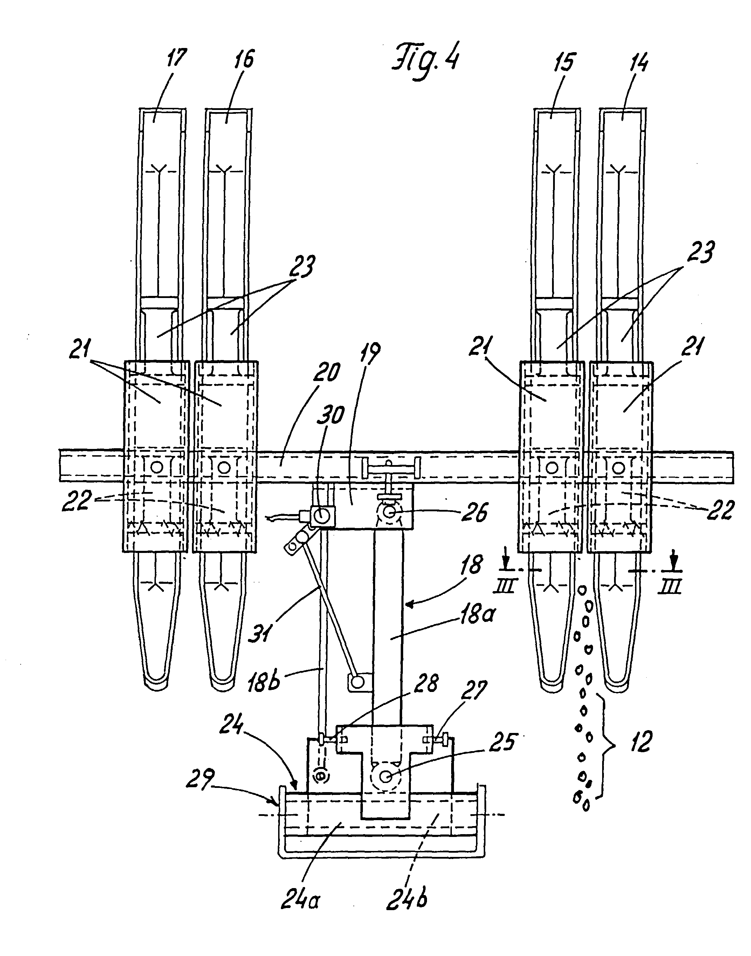

Die in der Figur 2 als Ganzes dargestellte Tasteinrichtung 9 beinhaltet einen als Stoppeltasteinrichtung 13 ausgebildeten Tastfühler. In der folgenden Beschreibung wird die Erfindung anhand einer Ausgestaltung miteinander verbundenen zwei Paaren von Tastkufen 14, 15, 16, 17 erläutert. Es sei jedoch erwähnt, daß die Erfindung auch bei Verwendung von nur einer oder einer beliebigen Vielzahl von Tastkufen genutzt werden kann. Die Stoppeltasteinrichtung 13 besteht im vorliegenden Ausführungsbeispiel aus vier Tastkufen 14, 15, 16, 17 und einer davor liegenden Horizontalparallelführung 18, die noch näher erläutert wird. Die Horizontalparallelführung 18 ist an der rückwärtigen, dem Schneidwerk 2 abgewandten Seite mit einem Koppelstück 19 in Form eines U-Profilabschnittes ausgerüstet. Über ein Gabelstück ist an dem Koppelstück 19 ein quer zur Längsachse des Mähdreschers stehendes Tragrohr 20 befestigt. Auf das Tragrohr 20 sind vier U-förmige Profilstücke 21 aufgesetzt. Die Profilstücke 21 sind fest mit dem viereckigen Tragrohr 20 verbunden, jedoch einstellbar. In jedem Profilstück 21 sind zwei Parallelogrammhebel 22, 23 schwenkbar gelagert. Die gegenüberliegenden unteren Enden der Parallelogrammhebel 22, 23 sind drehbar an den Tastkufen 14 bis 17 gelagert. Die Profilstücke 21 und die Parallelogrammhebel 22, 23 bilden eine Vertikalparallelführung für die Tastkufen 14 bis 17, bzw. eine Aufhängung. Die vorderen, dem Schneidwerk 2 zugewandten Parallelogrammhebel 22 können kürzer sein als die hinteren, so daß beim Überfahren eines Hindernisses oder einer Bodenunebenheit der jeweils vordere Bereich der Tastkufen 14 bis 17 stärker angehoben wird als der hintere. Die vordere Unterkante jeder Tastkufe 14 bis 17 steht unter einem stumpfen Winkel zum mittleren Kantenbereich, d. h. die untere Fläche jeder Tastkufe 14, 17 steht im vorderen Bereich schräg zur mittleren Unterseite. Auch dadurch wird das Überfahren von Bodenunebenheiten oder Hindernissen begünstigt. Ferner ist der vordere Bereich einer jeden Kufe keilförmig ausgebildet, wobei das vordere Ende in einem Bogen verläuft, damit die Tastkufen 14 bis 17 in keine Bodenunebenheiten eindringen. Außerdem wird durch die keilförmige Ausbildung durch die paarweise angeordneten Tastkufen 14, 15 und 16, 17 sinngemäß ein Einführkeil für die Stoppelreihe 12 gebildet, die insbesondere aus der Figur 4 erkennbar ist. Die Figur zeigt außerdem, daß die einzelnen Stoppeln in einem geringen Versatz zueinander stehen können. Da beispielsweise bei Verstopfungen der Mähdrescher 1 auch rückwärts fahren muß, ist vorgesehen, daß die hinteren Bereiche der Tastkufen 14 bis 17 abgewinkelt sind. Dadurch wird ebenfalls ein Überfahren von Hindernissen möglich. Im dargestellten Ausführungsbeispiel sind die Tastkufen 14 bis 17 aus U-Profilen gefertigt, die nach oben, d. h. zum Tragrohr 20 hin offen sind. Es können auch geschlossene Profile verwendet werden. Die Figur 2 zeigt, daß der Abstand zwischen den beiden Paaren von Tastkufen 14,15 und 16,17 wesentlich größer ist als der Abstand von zwei Stoppelreihen 12, damit wenigstens eine Stoppelreihe abgetastet wird, wenn der Bestand durch Fahrspuren beschädigt ist.

Die Horizontalparallelführung 18 besteht aus einem Hauptlenker 18a und einem Führungslenker 18b. Der Hauptlenker 18a ist ein Rohr-Profil-Abschnitt, der Führungslenker 18b eine Profilstange. Die beiden Enden des Hauptlenkers 18a sind drehbar gelagert. Das vordere Ende ist in einem Drehführung 24, das hintere Ende im Profilstück 19 um eine vertikale Achse schwenkbar gelagert. Die beiden Bolzen sind durch die Bezugszeichen 25, 26 gekennzeichnet. Die Drehführung 24 besteht aus einer Hülse 24a und einer oberen und unteren Lasche, die an der rückwärtigen Seite der Hülse 24 fest angesetzt sind und von dem vorderen Bolzen 25 durchdrungen sind. Die horizontale Schwenkbewegung des Hauptlenkers 18a der Horizontalparallelführung wird durch zwei seitliche, einstellbare Anschläge 27, 28 in Form von Einstellschrauben begrenzt. Die Hülse 24a ist auf einem Bolzen 24b gelagert. Der Bolzen 24b ist in den vertikalen, parallelen Schenkeln eines U-Profilstückes gelagert. Dieses U-Profilstück ist fest an eine Konsole angesetzt, welche wiederum an der Rückwand des Schneidwerkes 2 befestigt ist. Durch das U-Profilstück und die Konsole wird ein fester Halter 29 gebildet. So ergibt sich, daß die Stoppeltasteinrichtung 13 um die Längsachse des Bolzens 24b bzw. der Hülse 24a schwenkbar ist. An dem mit dem Tragrohr 20 verbundenen Koppelstück 19 ist ein Winkelmeßgerät in Form eines Potentiometers 30 angeordnet, welches mit einem Betätigungshebel versehen ist. An diesem Betätigungshebel ist das eine Ende des Übertragungshebels 31 gelenkig befestigt, dessen anderes Ende im vorderen Bereich an dem Hauptlenker 18a angelenkt ist. Die Figur 2 zeigt in Verbindung mit der Figur 4, daß sich die Stellung des Betätigungshebels des Potentiometers 30 ändert, sobald sich der Hauptlenker 18a der Horizontalparallelführung 18 bewegt. Die dadurch erzeugten Signale werden dann nach entsprechender Verarbeitung und Aufbereitung für die Lenkbewegung der hinteren Räder 7, 8 verwendet.

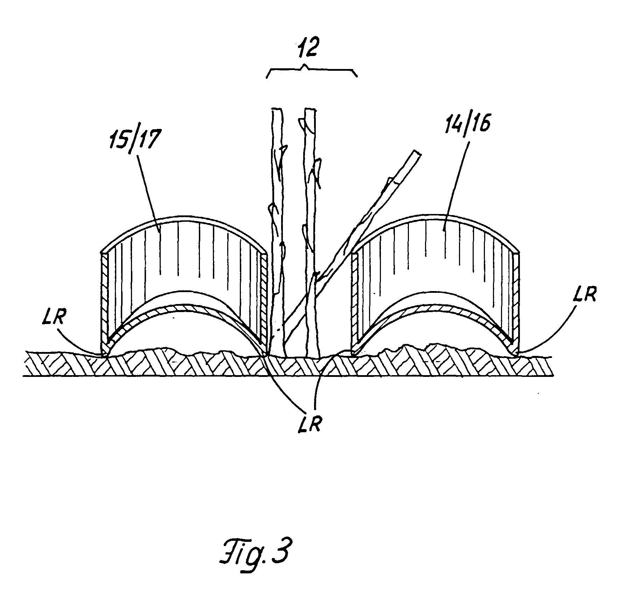

Die Figur 3 zeigt nochmals, daß die Tastkufen 14 bis 17 aus in Richtung zum Tragrohr 20 offenen U-Profilstücken gebildet sind. Dabei ist jedoch der zwischen den parallelen Außenschenkeln verlaufende, dem Erdboden zugewandte Mittelschenkel nicht gradlinig, sondern vom Feldboden abhebend mit Versatz in Richtung Tragrohr 20 geformt, so daß nur die Längsränder LR der Tastkufen 14 bis 17 den Boden berühren. Dadurch wird eine gute Anlage am Fuß der Stoppelreihen 12 erreicht. Außerdem werden von der Drillmaschine aufgeworfene Anhäufungen überfahren.

An dieser Stelle ist anzumerken, daß die Tastkufen nicht zwingend aus U-Profilstücken gebildet sein müssen, sondern auch andere Mittel denkbar sind, mit deren Hilfe die Stoppelreihe abgetastet werden kann. So ist es beispielsweise auch denkbar, die beschriebene Kantenführung der Tastkufen durch passend geformte Drähte oder Bandeisen oder massive Kunststoffblöcke mit entsprechenden Anformungen nachzuahmen.

Die Figur 4 zeigt die gesamte Tastvorrichtung in einer Draufsicht. Um zu verdeutlichen, daß der Führungslenker 18b an der einen oder anderen Seite des Hauptlenkers 18a liegen kann, ist er in der Figur 4 an der in Vorwärtsfahrtrichtung rechten Seite gezeigt. Es ergibt sich aus dieser Figur, daß durch den Hauptlenker 18a, den Führungslenker 18b und durch das Koppelstück 19 eine Parallelführung bzw. eine Viergelenkkette gebildet wird. Der Führungslenker 18b steht in der Grundstellung parallel zum Hauptlenker 18a. Diese Stellung wird beim Anheben des Schneidwerkes durch das Eigengewicht der Tasteinrichtung selbsttätig wieder eingenommen.

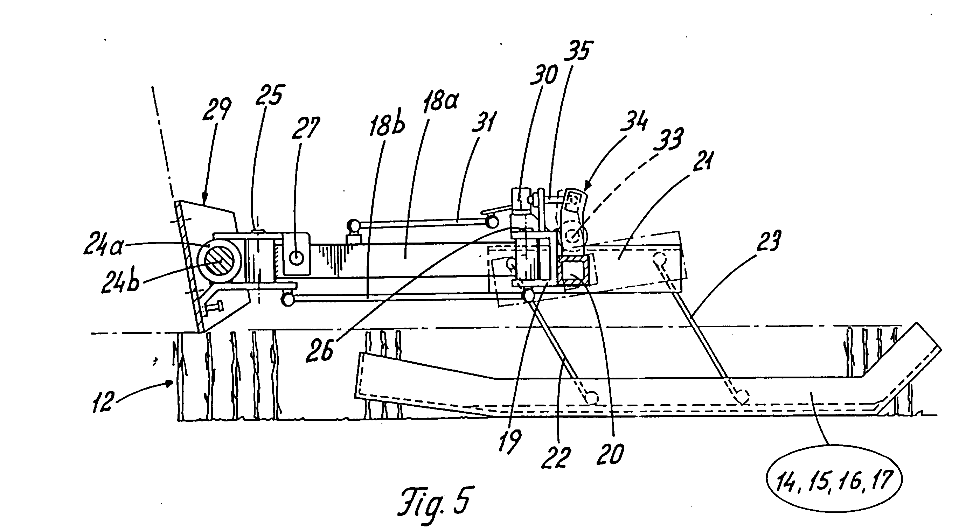

Die Figur 5 zeigt, daß das Tragrohr 20 und die daran verschiebbar angeordneten Profilstücke 21 gegenüber der Horizontalparallelführung 18 einstellbar sind. Dazu ist an das Koppelstück 19 an der rückwärtigen Seite eine Hülse 32 angeschweißt, in die ein Bolzen 33 gesteckt ist. Auf den Enden des Bolzens 33 ist eine Gabel 34 gelagert, deren äußere Schenkel mit dem Tragrohr 20 fest verbunden sind. Die Einstellung erfolgt über eine Einstellschraube 35. Die Figur 5 zeigt in Vollinien die Normalstellung, in der die Profilstücke 21 horizontal stehen. In strichpunktierten Linien ist die geneigte Stellung angedeutet.

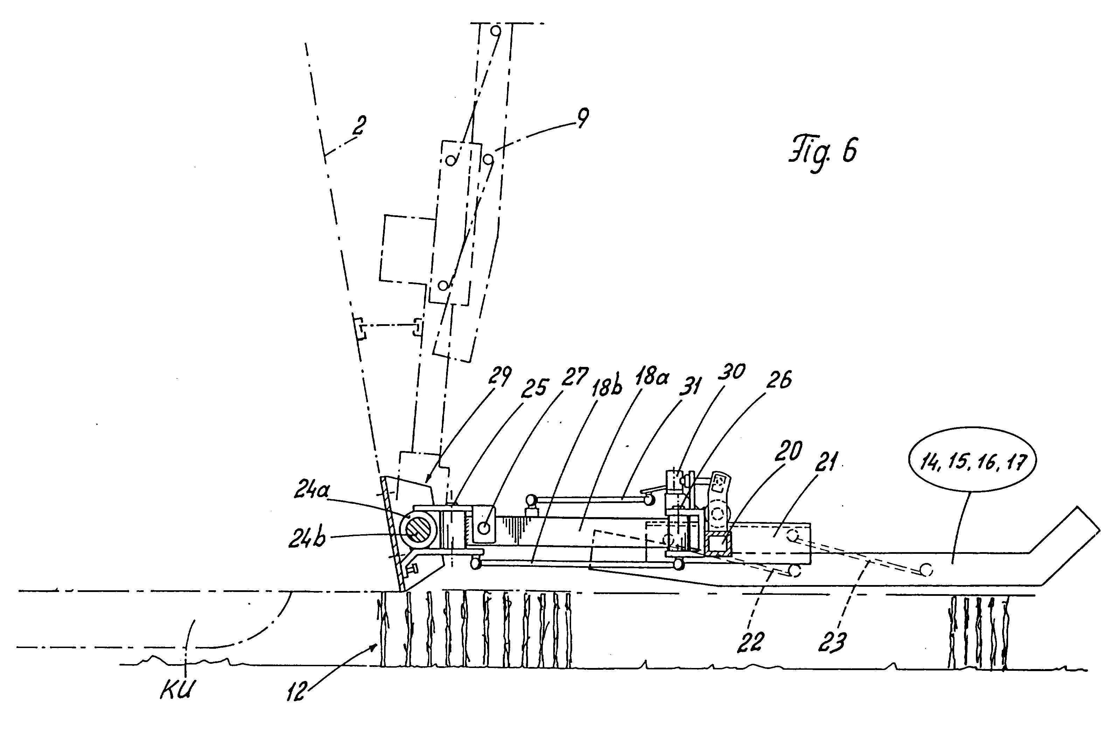

Die Figur 6 zeigt, daß in nicht näher dargestellter Weise die Tastkufen 14 bis 17 in einer Außerbetriebsstellung gebracht werden können, wenn beispielsweise der Autopilot ausgeschaltet wird. Die Tastkufen 14 bis 17 stehen dann oberhalb der freien oberen Enden der Stoppelreihen 12. Diese Stellung ist in Vollinien dargestellt. Für den Fahrbetrieb des Mähdreschers 1 kann die gesamte Tastvorrichtung um die Mittellängsachse des Bolzens 24b bzw. der Hülse 24a um einen Winkel von ca. 90° nach oben, d.h. in Richtung zum Schneidwerk 2 geschwenkt werden. Diese Stellung ist andeutungsweise in strichpunktierten Linien dargestellt.

Bei abgesenktem Schneidwerk 2 legen sich die zuvor auf den Abstand der Stoppelreihen 12 eingestellten Tastkufen 14 bis 17 auf den Boden. Durch die Bewegung des Mähdreschers 1 und die Möglichkeit, daß sich die Tastkufen 14 bis 17 parallel zu den Stoppelreihen 12 verschieben, fädeln sich die Tastkufen 14 bis 17 in die entsprechenden Stoppelreihen 12 ein. Bei störenden Faktoren, wie Fehlstellen, Lagerstellen und Fahrgassen im Getreidebestand wird die Tastereinrichtung aufgrund ihrer Nachlauf-Eigenschaft und dem Bodenkontakt in die Mittelstellung gezogen. Der Lenkautomat erhält dadurch das Signal "Geradeausfahrt". Bei eingeschaltetem Autopilot erhält der in die Reihenkultur eingefahrene Mähdrescher die Lenksignale der Stoppeltasteinrichtung 13. Beim Ausbrechen des Mähdreschers 1 nach links oder rechts, stützen sich die Tastkufen 14 bis 17 gegen die Stoppelreihen 12 ab. Ein solcher Vorgang führt zu einer Auslenkung der Horizontalparallelführung 18 und zur Abgabe eines elektrischen Signals durch das Potentiometer 30. Dadurch wird der Mähdrescher 1 exakt geführt. Die beschriebene Ausführung ermöglicht in einfacher Weise eine Grundeinstellung auf den jeweiligen Abstand zwischen zwei Stoppelreihen 13.

## Patentansprüche

1. Tastvorrichtung zur selbsttätigen Seitenführung einer selbstfahrenden Erntemaschine (1), die mit einem Getreideschneidwerk (2) ausgerüstet ist, bei deren Einsatz auf dem Feld vom Schnitt der Feldfrüchte Stoppelreihen (12) entstehen, wobei die Tastvorrichtung einen wenigstens eine Reihe der Feldfrüchte durch seitliche Anlage abtastenden, beweglichen Tastfühler (14, 15, 16, 17) beinhaltet, bei dem das bodenseitige Ende der Tasteinrichtung als Gleitkörper ausgeführt und dieser beweglich angelenkt ist, dessen Bewegung in elektrische Steuersignale umwandelbar und nach entsprechender Aufbereitung in eine Steuereinrichtung der lenkbaren Räder einspeisbar sind,
**dadurch gekennzeichnet,**
daß die Tastvorrichtung als Stoppeltasteinrichtung (13) mit mindestens einer zwischen zwei benachbarten Stoppelreihen (12) mit Boden- und Pflanzenkontakt führbaren Tastkufe (14, 15, 16, 17) ausgebildet und die Stoppeltasteinrichtung (13) direkt, bezogen auf die Vorwärtsfahrtrichtung, hinter dem Schneidwerk (2) einer selbstfahrenden Erntemaschine (1) angeordnet ist, wobei sich die Seitenwände im vorderen Bereich jeder Tastkufe (14, 15, 16, 17) keilförmig verjüngen, der vordere Endbereich in einem Bogen und die untere dem Erdboden zugewandte Fläche jeder Tastkufe (14, 15, 16, 17) konkav nach oben gezogen verläuft, die Breite jeder Tastkufe (14, 15, 16, 17) kleiner ist als der Abstand von zwei benachbarten Stoppelreihen (12) voneinander und vorzugsweise zwischen 60 und 80 % des Abstandes von zwei Stoppelreihen (12) liegt und sich die Länge jeder Tastkufe (14, 15, 16, 17) sich über den Abstand von mehreren Stoppeln einer Stoppelreihe (12) erstreckt.

2. Tastvorrichtung nach Anspruch 1,
**dadurch gekennzeichnet,**
daß sie im wesentlichen aus mindestens zwei beidseitig einer Stoppelreihe (12) mit Boden- und Pflanzenkontakt führbaren Tastkufen (14 bis 17) und einer quer zur Fahrtrichtung der Erntemaschine (1) bewegbaren Horizontal-Parallelführung (18) gebildet ist.

3. Tastvorrichtung nach Anspruch 1 oder 2,
**dadurch gekennzeichnet,**
daß die Stoppeltasteinrichtung (13) mit seitlichem Versatz zu den Schneidwerkgleitkufen (KU) außerhalb deren Wirkfläche hinter dem Schneidwerk (2) eines Mähdreschers (1) angeordnet ist.

4. Tastvorrichtung nach Anspruch 2 oder 3,
**dadurch gekennzeichnet,**
daß die Horizontalparallelführung (18) als Viergelenkkette ausgebildet ist, und daß die beiden bei Vorwärtsfahrtrichtung vorn liegenden Enden der Lenker (18a, 18b) der Horizontalparallelführung (18) in einer um eine horizontale Achse (24b) schwenkbaren Drehführung (24) gelagert sind.

5. Tastvorrichtung nach Anspruch 4,
**dadurch gekennzeichnet,**
daß die Drehführung (24) zur Begrenzung der Bewegung der Horizontalparallelführung (18) mit zwei vorzugsweise einstellbaren Anschlägen (27, 28) ausgerüstet ist.

6. Tastvorrichtung nach Anspruch 5,
**dadurch gekennzeichnet,**
daß die beiden Lenker (18a, 18b) der Horizontalparallelführung (18) mit ihren hinteren Enden in einem Koppelstück (19) gelagert sind, welches mit einem quer zur Längsachse der Erntemaschine (1) stehenden Tragrohr (20) bestückt ist, an dem jede Tastkufe (14, 15, 16, 17) gegen seitliche Verschiebung gesichert, jedoch im Abstand zueinander einstellbar mittels einer freibeweglichen Aufhängung angeordnet ist.

7. Tastvorrichtung nach Anspruch 6,
**dadurch gekennzeichnet,**
daß jede Aufhängung aus einer vertikalen Parallelführung gebildet ist, wobei die beiden Parallelogrammhebel (22, 23) mit den oberen Enden in einem auf dem Tragrohr (20) festgesetzten Profilstück (21) parallel und im Abstand zueinander gelagert sind, und daß die unteren Enden der Parallelogrammhebel (22, 23) im Abstand zueinander an der jeweiligen Tastkufe (14, 15, 16, 17) gelagert sind.

8. Tastvorrichtung nach Anspruch 7,
**dadurch gekennzeichnet,**
daß jeder in Vorwärtsfahrtrichtung vorn liegende Parallelogrammhebel (22) dei Vertikalparallelführung kürzer ist als der hintere Parallelogrammhebel (23).

9. Tastvorrichtung nach einem oder mehreren der vorhergehenden Ansprüche 1 bis 8,
**dadurch gekennzeichnet,**
daß die Unterkante im vorderen Bereich jeder Tastkufe (14, 15, 16, 17) unter einen stumpfen Winkel zum mittleren Bereich steht.

10. Tastvorrichtung nach einem oder mehreren der vorhergehenden Ansprüche 1 bis 9,
**dadurch gekennzeichnet,**
daß die Unterkante des hinteren Bereichs jeder Tastkufe (14, 15, 16, 17) nach oben abgewinkelt ist.

11. Tastvorrichtung nach einem oder mehreren der Ansprüche 1 bis 10,
**dadurch gekennzeichnet,**
daß die Drehführung (24) in einem Halter (29) schwenkbar gelagert ist, der in vorderen Bereich der Erntemaschine (1) an Maschinenteilen festgelegt ist.

12. Tastvorrichtung für einen Mähdrescher nach Anspruch 11,
**dadurch gekennzeichnet,**
daß der Halter (29) an der rückseitigen, dem Schneidmesser abgewandten Seite des Schneidwerkes (2) befestigt ist.

13. Tastvorrichtung nach Anspruch 7,
**dadurch gekennzeichnet,**
daß das Tragrohr (20) mittels einer Einstellvorrichtung gegenüber der Horizontalparallelogrammführung (18) um eine horizontale Achse verdrehbar ist.

14. Tastvorrichtung nach einem oder mehreren der Ansprüche 1 bis 13,
**dadurch gekennzeichnet,**
daß die Kontur der Tastkufen aus Rundstahl gebildet ist.

15. Tastvorrichtung nach einem oder mehreren der Ansprüche 1 bis 14,
**dadurch gekennzeichnet,**
daß die Tastkufen aus Kunststoffmaterial bestehen.

## Claims

1. A sensing apparatus for automatic lateral guidance of a self-propelled harvester (1) which is equipped with a grain cutting mechanism (2), upon the use of which rows of stubble (12) are produced on the ground from cutting of the agricultural crop, wherein the sensing apparatus includes a movable sensor element (14, 15, 16, 17) which senses at least one row of the agricultural crops by bearing laterally thereagainst, and in which the end of the sensing device which is towards the ground is in the form of a sliding body and the latter is movably pivotally mounted, and the movement of which can be converted into electrical control signals and after suitable processing can be fed into a control device for the steerable wheels, characterised in that the sensing apparatus is in the form of a stubble sensing device (13) with at least one sensing skid (14, 15, 16, 17) which can be guided between two adjacent rows of stubble (12) with ground and plant contact and the stubble sensing device (13), relative to the direction of forward travel, is arranged directly behind the cutting mechanism (2) of a self-propelled harvester (1), wherein the side walls in the front region of each sensing skid (14, 15, 16, 17) taper in a wedge-shaped configuration, the front end region extends in an arc and the bottom surface, which is towards the ground, of each sensing skid (14, 15, 16, 17) extends in a concavely upwardly drawn configuration, the width of each sensing skid (14, 15, 16, 17) is less than the spacing of two adjacent rows of stubble (12) from each other and is preferably between 60 and 80% of the spacing of two rows of stubble (12) and the length of each sensing skid (14, 15, 16, 17) extends over the spacing of a plurality of stubble stalks of a row (12) of stubble.

2. A sensing apparatus according to claim 1 characterised in that it is substantially formed from at least two sensing skids (14 to 17) which can be guided on both sides of a row of stubble (12) with ground and plant contact and a horizontal parallel guide means (18) which is movable transversely with respect to the direction of travel of the harvester (1).

3. A sensing apparatus according to claim 1 or claim 2 characterised in that the stubble sensing device (13) is arranged with a lateral displacement relative to the cutting mechanism sliding skids (KU) outside the active surface thereof behind the cutting mechanism (2) of a combine harvester (1).

4. A sensing apparatus according to claim 2 or claim 3 characterised in that the horizontal parallel guide means (18) is in the form of a four-bar chain and that the two ends, which are at the front in the direction of forward travel, of the links (18a, 18b) of the horizontal parallel guide means (18) are mounted in a rotary guide means (24) which is pivotable about a horizontal axis (24b).

5. A sensing apparatus according to claim 4 characterised in that the rotary guide means (24) is provided with two preferably adjustable stops (27, 28) for limiting the movement of the horizontal parallel guide means (18).

6. A sensing apparatus according to claim 5 characterised in that the two links (18a, 18b) of the horizontal parallel guide means (18) are supported with their rear ends in a coupling portion (19) provided with a carrier tube (20) which is disposed transversely with respect to the longitudinal axis of the harvester (1) and on which each sensing skid (14, 15, 16, 17) is secured against lateral displacement but is arranged at a spacing relative to each other adjustably by means of a freely movable suspension.

7. A sensing apparatus according to claim 6 characterised in that each suspension is formed from a vertical parallel guide means, wherein the two parallelogram levers (22, 23) are supported in parallel and mutually spaced relationship with the upper ends in a profile portion (21) fixed on the carrier tube (20), and that the lower ends of the parallelogram levers (22, 23) are mounted at a spacing relative to each other to the respective sensing skid (14, 15, 16, 17).

8. A sensing apparatus according to claim 7 characterised in that each parallelogram lever (22) of the vertical parallel guide means, which is at the front in the direction of forward travel, is shorter than the rear parallelogram lever (23).

9. A sensing apparatus according to one or more of preceding claims 1 to 8 characterised in that the lower edge in the front region of each sensing skid (14, 15, 16, 17) is at an obtuse angle to the central region.

10. A sensing apparatus according to one or more of preceding claims 1 to 9 characterised in that the lower edge of the rear region of each sensing skid (14, 15, 16, 17) is angled upwardly.

11. A sensing apparatus according to one or more of claims 1 to 10 characterised in that the rotary guide means (24) is mounted pivotably in a holder (29) which is fixed in the front region of the harvester (1) to parts of the machine.

12. A sensing apparatus for a combine harvester according to claim 11 characterised in that the holder (29) is secured to the rearward side of the cutting mechanism (2), which side is remote from the cutting blade.

13. A sensing apparatus according to claim 7 characterised in that the carrier tube (20) is rotatable about a horizontal axis by means of an adjusting device with respect to the horizontal parallelogram guide means (18).

14. A sensing apparatus according to one or more of claims 1 to 13 characterised in that the contour of the sensing skids is formed from round steel.

15. A sensing apparatus according to one or more of claims 1 to 14 characterised in that the sensing skids comprise plastics material.

## Revendications

1. Dispositif palpeur pour le guidage latéral automatique d'une machine de récolte (1) automotrice équipée d'un mécanisme de coupe de céréales (2), lors de l'utilisation de laquelle des rangs de chaumes (12) sont formés dans le champ à la suite de la coupe du produit, le dispositif palpeur comprenant un palpeur (14, 15, 16, 17) mobile, qui palpe par contact latéral au moins un rang de produit, dans lequel l'extrémité côté sol du dispositif palpeur est conformée en patin articulé mobile, dont le déplacement est transformé en signaux de commande électriques qui, après un traitement adapté, sont transmis à un dispositif de commande des roues orientables, caractérisé par le fait que le dispositif palpeur est agencé en dispositif palpeur de chaumes (13), avec au moins un patin palpeur (14, 15, 16, 17) qui peut être déplacé en contact avec le sol et avec la plante, entre deux rangs voisins de chaumes (12), et que le dispositif palpeur de chaumes (13), rapporté à la direction de marche avant, est disposé immédiatement derrière le tablier de coupe (2) d'une machine de récolte automotrice (1), les parois latérales se rétrécissant en forme de coin dans la région antérieure de chaque patin palpeur (14, 15, 16, 17), la partie d'extrémité avant étant courbée vers le haut et la surface inférieure, tournée vers le sol, de chaque patin palpeur (14, 15, 16, 17) présentant une concavité vers le haut, la largeur de chaque patin palpeur (14, 15, 16, 17) étant inférieure à la distance entre deux rangs de chaumes (12) voisins et étant comprise de préférence entre 60 et 80% de la distance entre deux rangs de chaumes (12) et la longueur de chaque patin palpeur (14, 15, 16, 17) s'étendant sur la distance de plusieurs chaumes d'un rang de chaumes (12).

2. Dispositif palpeur selon la revendication 1, caractérisé par le fait qu'il est formé essentiellement d'au moins deux patins palpeurs (14 à 17), déplacés en contact avec le sol et avec la plante, de part et d'autre d'un rang de chaumes (12), et d'un système de guidage parallèle horizontal (18) qui peut être déplacé transversalement à la direction de marche de la machine de récolte (1).

3. Dispositif palpeur selon la revendication 1 ou 2, caractérisé par le fait que le dispositif palpeur de chaumes (13) est monté décalé latéralement par rapport aux patins de tablier de coupe (KU), en dehors de la surface active de ceux-ci, derrière le tablier de coupe (2) d'une moissonneuse-batteuse (1).

4. Dispositif palpeur selon la revendication 2 ou 3, caractérisé par le fait que le système de guidage parallèle horizontal (18) est conformé en chaîne à quatre articulations et par le fait que les deux extrémités antérieures, vu dans la direction de marche avant, des biellettes (18a, 18b) du système de guidage parallèle horizontal (18) sont liées à un système de guidage en rotation (24) qui pivote autour d'un axe (24b) horizontal.

5. Dispositif palpeur selon la revendication 4, caractérisé par le fait que le système de guidage en rotation (24) est pourvu de deux butées (27, 28), de préférence réglables, pour limiter le déplacement du système de guidage parallèle horizontal (18).

6. Dispositif palpeur selon la revendication 5, caractérisé par le fait que les deux biellettes (18a, 18b) du système de guidage parallèle horizontal (18) sont liées par leur extrémité arrière à un élément de couplage (19) qui porte un tube de support (20) disposé transversalement à l'axe longitudinal de la machine de récolte (1), sur lequel les patins palpeurs (14, 15, 16, 17) sont montés fixes dans la direction latérale, avec cependant possibilité de réglage de leur écartement réciproque, au moyen d'une suspension libre.

7. Dispositif palpeur selon la revendication 6, caractérisé par le fait que chaque suspension est formée d'un système de guidage parallèle vertical, les deux leviers de parallélogramme (22, 23) étant fixés par leur extrémité supérieure parallèlement et à distance l'un de l'autre à un élément profilé (21) solidaire du tube de support (20) et par le fait que les extrémités inférieures des leviers de parallélogramme (22, 23) sont fixées à distance l'une de l'autre au patin palpeur concerné (14, 15, 16, 17).

8. Dispositif palpeur selon la revendication 7, caractérisé par le fait que chaque levier de parallélogramme (22) du système de guidage parallèle vertical avant, vu dans la direction de marche avant, est plus court que le levier de parallélogramme (23) arrière.

9. Dispositif palpeur selon une ou plusieurs des revendications précédentes 1 à 8, caractérisé par le fait que le bord inférieur dans la partie antérieure de chaque patin palpeur (14, 15, 16, 17) forme un angle obtus avec la partie médiane de celui-ci.

10. Dispositif palpeur selon une ou plusieurs des revendications précédentes 1 à 9, caractérisé par le fait que le bord inférieur dans la partie postérieure de chaque patin palpeur (14, 15, 16, 17) est coudé vers le haut.

11. Dispositif palpeur selon une ou plusieurs des revendications précédentes 1 à 10, caractérisé par le fait que le système de guidage en rotation (24) est monté pivotant dans un support (29) lié à des éléments de machine dans la partie avant de la machine de récolte (1).

12. Dispositif palpeur selon la revendications 11, caractérisé par le fait que le support (29) est fixé à la face arrière, éloignée du couteau, du tablier de coupe (2).

13. Dispositif palpeur selon la revendication 7, caractérisé par le fait que le tube de support (20) peut pivoter autour d'un axe horizontal par rapport au système de guidage parallèle horizontal (18), sous l'action d'un dispositif de réglage.

14. Dispositif palpeur selon une ou plusieurs des revendications 1 à 13, caractérisé par le fait que le contour des patins palpeurs est formé de ronds en acier.

15. Dispositif palpeur selon une ou plusieurs des revendications 1 à 14, caractérisé par le fait que les patins palpeurs sont formés de matière plastique.
